# EUROPEAN PATENT APPLICATION

(11) **EP 4 494 504 A1**
(43) Date of publication of application: **22.01.2025**
(21) Application number: 22932048.6
(22) Date of filing: 16.03.2022
(51) Int. Cl.: A24F 40/53

(54) **POWER SUPPLY UNIT OF AEROSOL GENERATOR AND CONTROL METHOD THEREOF**

(71) Applicant: Japan Tobacco Inc., Tokyo 105-6927 (JP)
(72) Inventor: KAWANAGO Hiroshi, Tokyo 130-8603 (JP); YAMADA Kentaro, Tokyo 130-8603 (JP)
(74) Representative: Hoffmann Eitle
(86) International application number: PCT/JP2022/011907
(87) International publication number: WO 2023/175769

(57) **Abstract**

Provided is a highly safe aerosol generator. This power supply unit (110) comprises: an MCU (11) that controls the supply of heating power from a battery (12) to a heater (40); a protection circuit (30) that limits the supply of the heating power to the heater (40); and a monitoring circuit (20) that includes a charging circuit (a resistive element (22) and a capacitor (23)) capable of storing electricity by means of an output voltage Vs, when heating power is supplied from the battery (12) to the heater (40), and outputs a signal (abnormality detection signal) for operating the protection circuit (30) on the basis of the voltage of the charging circuit, wherein the MCU (11) performs discharge control to discharge the voltage of the charging circuit at a timing (a start timing of a measurement period TD) based on a supply period (control period TC) of the heating power to the heater (40).

## Description

### TECHNICAL FIELD

The present invention relates to a power supply unit for an aerosol generating device and a control method therefor.

### BACKGROUND ART

Patent Literature 1 discloses an aerosol generating system including a heat generator that heats an aerosol forming base, a power supply that supplies power to the heat generator, and an electric circuit that communicates with the heat generator and the power source. The electric circuit adjusts the power supply to the heat generator in a plurality of individual heating cycles in response to a user input, determines a maximum electric resistance of the heat generator in each heating cycle, calculates a moving average value of the maximum electric resistance of the heat generator in n heating cycles ahead, compares an electric resistance of the heat generator with the calculated moving average value, determines a failure when the electric resistance is larger than a threshold value than the moving average value, and controls the power supplied to the heat generator based on whether the heat generator has a failure.

Patent Literature 2 discloses an aerosol generating system that includes an electric heater including a heat generator that heats an aerosol forming base, a power supply, and an electric circuit connected to the electric heater and the power supply. The electric circuit determines a predetermined state when a ratio of an initial electric resistance of the electric heater to a change in the electric resistance from the initial electric resistance is larger than a maximum threshold value, and limits power supplied to the electric heater when the predetermined state exists.

### CITATION LIST

### PATENT LITERATURE

Patent Literature 1: JP2021-526015A
Patent Literature 2: JP2018-514191A

### SUMMARY OF INVENTION

### TECHNICAL PROBLEM

As disclosed in Patent Literatures 1 and 2, in the aerosol generating device, a technique is known in which a processor that controls power supply to a heating element for heating an aerosol forming base limits power supply to the heating element when a temperature of the heating element or a temperature of the aerosol forming base heated by the heating element is high. However, if some abnormality occurs in the processor, the power supply to the heating element may not be limited.

An object of the present invention is to provide a power supply unit for an aerosol generating device with improved safety and a control method therefor.

### SOLUTION TO PROBLEM

A power supply unit for an aerosol generating device according to an aspect of the present invention includes: a power supply; a processor configured to perform control to supply heating power from the power supply to a heating element for heating an aerosol source and/or a flavor source; a protection circuit configured to limit supply of the heating power to the heating element; and a monitoring circuit including a charge circuit that is capable of storing power by the heating power when the heating power is supplied from the power supply to the heating element, the monitoring circuit being configured to output a signal for operating the protection circuit based on a voltage of the charge circuit, in which the processor is configured to perform discharge control for discharging the voltage of the charge circuit at a timing based on a supply cycle of the heating power to the heating element.

A control method for a power supply unit for an aerosol generating device according to an aspect of the present invention is a control method for a power supply unit for an aerosol generating device including: a processor configured to perform control to supply heating power from a power supply to a heating element for heating an aerosol source and/or a flavor source; a protection circuit configured to limit supply to the heating element; and a charge circuit capable of storing the power. The control method includes: performing discharge control to discharge a voltage of the charge circuit at a timing based on a supply cycle of the power to the heating element; and operating the protection circuit based on the voltage of the charge circuit.

### ADVANTAGEOUS EFFECTS OF INVENTION

According to the present invention, safety can be improved.

### BRIEF DESCRIPTION OF DRAWINGS

FIG. 1 is a schematic diagram schematically illustrating a configuration example of an aerosol generating device.
FIG. 2 is a diagram illustrating a specific example of an electronic circuit 10 related to heating of a base material portion in a power supply unit 110 illustrated in FIG. 1.
FIG. 3 is a timing chart illustrating an operation of a MCU 11 in an aerosol generation mode.
FIG. 4 is a diagram illustrating an example of a protection circuit 30.
FIG. 5 is a diagram illustrating an example of a heating profile.
FIG. 6 is a diagram illustrating an electronic circuit 10A that is a modification of the electronic circuit 10 illustrated in FIG. 2.
FIG. 7 is a timing chart illustrating an operation of the MCU 11 in a second modification.
FIG. 8 is a diagram illustrating an electronic circuit 10B that is a modification of the electronic circuit 10 illustrated in FIG. 2.

### DESCRIPTION OF EMBODIMENTS

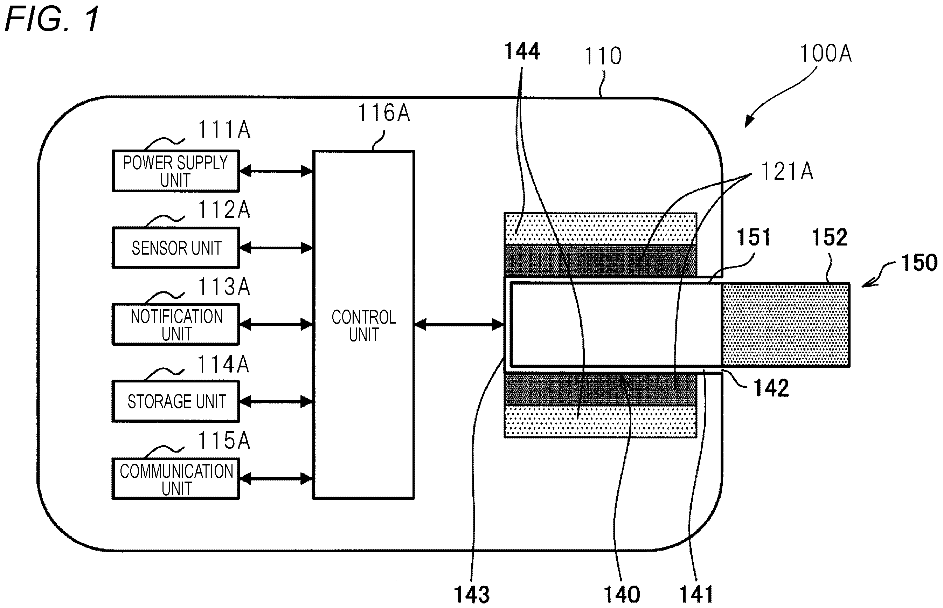

An aerosol generating device according to an embodiment is a device that consumes power to atomize an aerosol source contained in an attached aerosol former to generate aerosol, and makes the generated aerosol inhalable. Although a configuration of the aerosol generating device includes various configurations and is not particularly limited, a typical configuration example of the aerosol generating device will be described below with reference to FIG. 1.

FIG. 1 is a schematic diagram schematically illustrating a configuration example of the aerosol generating device. An aerosol generating device 100A illustrated in FIG. 1 includes a power supply unit 110 including a power supply unit 111A, a sensor unit 112A, a notification unit 113A, a storage unit 114A, a communication unit 115A, a control unit 116A, a heating portion 121A, a holding portion 140, and a heat insulating portion 144, and a stick-type base material 150 constituting an aerosol former.

The power supply unit 111A stores power. Further, the power supply unit 111A supplies power to each constituent component of the aerosol generating device 100A under the control of the control unit 116A. The power supply unit 111A may be implemented by, for example, a rechargeable battery such as a lithium-ion secondary battery.

The sensor unit 112A acquires various kinds of information related to the aerosol generating device 100A. For example, the sensor unit 112A is implemented by an inhalation sensor including a pressure sensor such as a condenser microphone, a flow rate sensor, a temperature sensor, or the like, and acquires a value associated with inhalation by a user. As another example, the sensor unit 112A is implemented by an input device that receives input of information from the user, such as a button or a switch.

The notification unit 113A notifies the user of the information. The notification unit 113A is implemented by, for example, a light emitting device that emits light, a display device that displays an image, a sound output device that outputs sound, or a vibration device that vibrates.

The storage unit 114A stores various kinds of information for an operation of the aerosol generating device 100A. The storage unit 114A is implemented by, for example, a nonvolatile storage medium such as a flash memory.

The communication unit 115A is a communication interface capable of performing communication conforming to any wired or wireless communication standard. As such a communication standard, for example, Wi-Fi (registered trademark) or Bluetooth (registered trademark) may be adopted.

The control unit 116A controls overall operations in the aerosol generating device 100A according to various programs. The control unit 116A is implemented by, for example, an electronic circuit including a processor such as a central processing unit (CPU) or a micro controller unit (MCU).

The holding portion 140 has an internal space 141, and holds the stick-type base material 150 while accommodating a part of the stick-type base material 150 in the internal space 141. The holding portion 140 has an opening 142 through which the internal space 141 communicates with the outside, and holds the stick-type base material 150 inserted into the internal space 141 from the opening 142. For example, the holding portion 140 is a cylindrical body having the opening 142 and a bottom portion 143 as a bottom surface, and defines the columnar internal space 141. The holding portion 140 also has a function of defining a flow path of air supplied to the stick-type base material 150. An air inlet hole, which is an inlet of the air to the flow path, is disposed, for example, in the bottom portion 143. On the other hand, an air outlet hole, which is an outlet of the air from the flow path, is the opening 142.

The stick-type base material 150 includes a base material portion 151 and an inhalation port portion 152. The base material portion 151 includes an aerosol source. The aerosol source is atomized to generate an aerosol. The aerosol source is, for example, a liquid such as water or a polyhydric alcohol such as glycerin and propylene glycol. In this configuration example, the aerosol source is not limited to a liquid, and may be a solid. The base material portion 151 may further include a flavor source. The flavor source is a constituent component for imparting a flavor component to an aerosol. The flavor source may include the flavor component derived from tobacco or non-tobacco (derived from an additive such as menthol or a fragrance).

In a state where the stick-type base material 150 is held by the holding portion 140, at least a part of a base material portion 151 is accommodated in the internal space 141, and at least a part of the inhalation port portion 152 protrudes from the opening 142. When the user bites the inhalation port portion 152 protruding from the opening 142 and inhales, air flows into the internal space 141 from an air inlet hole (not illustrated), and reaches the mouth of the user together with an aerosol generated from the base material portion 151.

In the example illustrated in FIG. 1, the heating portion 121A is a sheet-shaped heater and is disposed to cover an outer periphery of the holding portion 140. When the heating portion 121A generates heat, the base material portion 151 of the stick-type base material 150 is heated from an outer periphery, and an aerosol is generated. The sheet-shaped heater constitutes a heating element for heating an aerosol source included in the base material portion 151 (a flavor source when the base material portion 151 includes a flavor source).

The heat insulating portion 144 prevents heat transfer from the heating portion 121A to other constituent components. For example, the heat insulating portion 144 is made of a vacuum heat insulating material or an aerogel heat insulating material.

A configuration example of the aerosol generating device 100A has been described above. It is needless to say that the configuration of the aerosol generating device 100A is not limited to the above, and may adopt various configurations as exemplified below. As an example, the heating portion 121A may be formed by a blade-shaped heater and disposed to protrude from the bottom portion 143 of the holding portion 140 into the internal space 141. In this case, the heating portion 121A is inserted into the base material portion 151 of the stick-type base material 150, and heats the base material portion 151 of the stick-type base material 150 from the inside. As another example, the sheet-shaped heater constituting the heating portion 121A may be disposed to cover the bottom portion 143 of the holding portion 140. Further, the heating portion 121A may be implemented by a combination of two or more of a first heating portion covering the outer periphery of the holding portion 140, a blade-shaped second heating portion, and a third heating portion covering the bottom portion 143 of the holding portion 140.

As another example, the holding portion 140 may include an opening and closing mechanism such as a hinge that opens and closes a part of an outer shell forming the internal space 141. The holding portion 140 may open and close the outer shell to sandwich and hold the stick-type base material 150 inserted into the internal space 141. In that case, the heating portion 121A may be provided at a sandwiching and holding place in the holding portion 140 and heat the stick-type base material 150 while pressing the stick-type base material 150. A method for atomizing the base material portion 151 is not limited to heating by the heating portion 121A. For example, the base material portion 151 may be heated by induction heating. When the induction heating is adopted, the heating portion 121A may be a reactor (coil) and a susceptor may be accommodated in the base material portion 151. With this configuration, by supplying power to the reactor, the susceptor can be heated by induction heating to heat the base material portion 151. In this case, the reactor constitutes the heating element.

The aerosol generating device 100A may be configured such that a container filled with an aerosol source and a flavor source or only an aerosol source can be accommodated in the internal space 141 instead of the stick-type base material 150, and the heating portion 121A heats the container.

In addition, the aerosol generating device 100A may be configured such that a first container in which a liquid aerosol source and a heating portion (heater) that heats the aerosol source are accommodated, and a second container that can be disposed in a path through which an aerosol generated by heating the aerosol source of the first container can pass and accommodates a flavor source are detachably attached to the power supply unit 110, and a control unit 116A performs power supply control to a heating portion of the first container to generate an aerosol to which a flavor is imparted. In addition, in this configuration, a heating portion that heats the second container may be further provided in the power supply unit 110, and the control unit 116A may perform power supply control to the heating portion that heats the second container to heat the flavor source.

### (Circuit Configuration of Power Supply Unit)

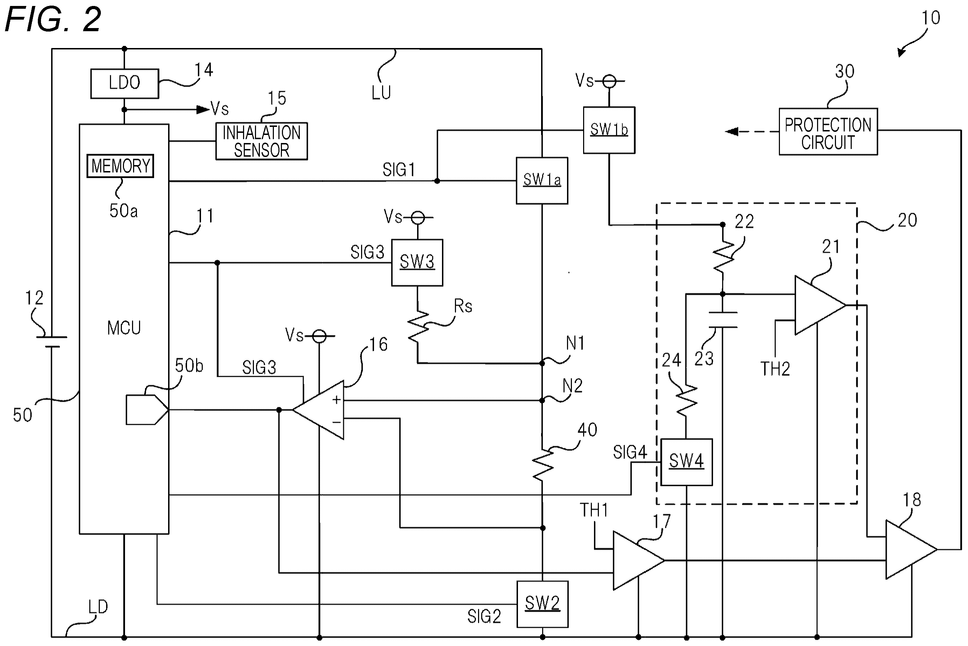

FIG. 2 is a diagram illustrating a specific example of the electronic circuit 10 related to heating of the base material portion 151 in the power supply unit 110 (hereinafter, also simply referred to as a power supply unit) illustrated in FIG. 1.

The electronic circuit 10 includes a battery 12 which is an example of a power supply unit 111A, an MCU 11 which is an example of the control unit 116A, a low drop out (LDO) regulator 14, an inhalation sensor 15 which is an example of the sensor unit 112A, a switch SW1a, a switch SW1b, a switch SW2, a switch SW3, an operational amplifier 16, a resistance element Rs, a comparator 17, a comparator 18, a monitoring circuit 20 including a comparator 21, a resistance element 22, a capacitor 23, a resistance element 24, and a switch SW4, and a protection circuit 30. The MCU 11 includes an analog-to-digital converter (hereinafter referred to as ADC) 50b and a memory 50a that stores various types of information. Hereinafter, the switch SW1a or the switch SW1b is collectively referred to as a switch SW1.

The resistance element described in the present description may be an element having a fixed electric resistance value, and is, for example, a resistor, a diode, or a transistor. In the example of FIG. 2, each of the resistance element Rs, the resistance element 22, and the resistance element 24 is a resistor. In the example of FIG. 2, the heater 40 is a resistor.

The switch described in the present specification is, for example, a semi-conductor switching element such as a transistor that switches between disconnection and conduction of a wiring path, or a load switch formed by combining a capacitor, a resistor, a transistor, and the like. A state where the switch conducts between input and output is described as an on state, and a state where the switch disconnects between the input and output is described as an off state.

An input terminal of the LDO regulator 14 and one end of the switch SW1a are connected to a main positive bus LU connected to a positive electrode of the battery 12. The LDO regulator 14 steps down a voltage from the battery 12 and outputs the voltage. An output voltage Vs of the LDO regulator 14 is also used as an operating voltage of each of the MCU 11, the operational amplifier 16, the comparator 17, the comparator 18, and the comparator 21 of the monitoring circuit 20.

The MCU 11 is connected to the LDO regulator 14 and a main negative bus LD connected to a negative electrode of the battery 12. The MCU 11 is also connected to each of the switches SW1 to SW4, and performs on or off control of the switches SW1 to SW4. The MCU 11 is also connected to an enable terminal of the operational amplifier 16 and controls the operational amplifier 16.

The MCU 11 inputs a control signal SIG1 to a control terminal of the switch SW1. Hereinafter, it is assumed that the switch SW1 is in a conductive state when the control signal SIG1 is at a high level, and the switch SW1 is in a disconnected state when the control signal SIG1 is at a low level.

The MCU 11 inputs a control signal SIG2 to a control terminal of the switch SW2. Hereinafter, it is assumed that the switch SW2 is in a conductive state when the control signal SIG2 is at a high level, and the switch SW2 is in a disconnected state when the control signal SIG2 is at a low level.

The MCU 11 inputs a control signal SIG3 to each of a control terminal of the switch SW3 and an enable terminal of the operational amplifier 16. Hereinafter, it is assumed that the switch SW3 is in a conductive state when the control signal SIG3 is at a high level, and the switch SW3 is in a disconnected state when the control signal SIG3 is at a low level. When the control signal SIG3 is at a high level, the operational amplifier 16 operates (outputs based on an input voltage), and when the control signal SIG3 is at a low level, the operational amplifier 16 stops outputting.

The MCU 11 inputs the control signal SIG4 to a control terminal of the switch SW4. Hereinafter, it is assumed that the switch SW4 is in a conductive state when the control signal SIG4 is at a high level, and the switch SW4 is in a disconnected state when the control signal SIG4 is at a low level.

A series circuit including the heater 40 and the switch SW2 is connected between the other end of the switch SW1a and the main negative bus LD. One end of the switch SW1b is connected to a power supply line to which the output voltage Vs is supplied. An RC series circuit including the resistance element 22 and the capacitor 23 is connected between the other end of the switch SW1b and the main negative bus LD. The RC series circuit may be a circuit capable of setting a time constant, and is not limited to a configuration illustrated in FIG. 2. For example, a constant current circuit may be provided instead of the resistance element 22.

Specifically, the other end of the switch SW1a is connected to one end of the heater 40. The other end of the heater 40 is connected to the main negative bus line LD via the switch SW2. The other end of the switch SW1b is connected to one end of the resistance element 22. The other end of the resistance element 22 is connected to the main negative bus line LD via the capacitor 23.

One end of the resistance element Rs is connected to a node N1 connecting the switch SW1a and the heater 40. The other end of the resistance element Rs is connected to one end of the switch SW3. The other end of the switch SW3 is connected to the power supply line to which the output voltage Vs is supplied.

A non-inverting input terminal of the operational amplifier 16 is connected to a node N2 connecting the node N1 and the heater 40. An inverting input terminal of the operational amplifier 16 is connected to a node connecting the heater 40 and the switch SW2. The operational amplifier 16 is a differential amplifier that amplifies a voltage between both ends of the heater 40 and outputs the amplified voltage. An output terminal of the operational amplifier 16 is connected to an ADC 50b built in the MCU 11 and a first input terminal of the comparator 17. A circuit that generates a voltage value of a threshold value TH 1 is connected to a second input terminal of the comparator 17, and the threshold value TH 1 is input from this circuit. When a voltage value input to the first input terminal exceeds the threshold value TH1, the comparator 17 outputs a high-level or low-level high-temperature detection signal. The threshold value TH1 may be generated by resistance-dividing the output voltage Vs. In this case, in addition to an output voltage of the operational amplifier 16, that is, a voltage value input to the first input terminal of the comparator 17, the threshold value TH1 also follows the fluctuation of the output voltage Vs, thereby obtaining an effect of canceling the fluctuation of the output voltage Vs. More specifically, since the output voltage Vs is resistance-divided and input to the operational amplifier 16, when the output voltage Vs fluctuates, the output voltage of the operational amplifier 16, that is, the voltage value input to the first input terminal of the comparator 17 also fluctuates. When the threshold value TH1 is also generated by resistance-dividing the output voltage Vs, the threshold value TH1 similarly fluctuates when the output voltage Vs fluctuates. Therefore, a voltage value input to either the first input terminal or the second input terminal of the comparator 17 can also follow the fluctuation of the output voltage Vs.

One end of the resistance element 24 is connected to a node connecting the resistance element 22 and the capacitor 23 in the monitoring circuit 20. The other end of the resistance element 24 is connected to the main negative bus line LD via the switch SW4. A first input terminal of the comparator 21 is further connected to a node connecting the resistance element 22 and the capacitor 23. A circuit that generates a voltage value of a threshold value TH2 is connected to a second input terminal of the comparator 21, and the threshold value TH2 is input from this circuit. When a voltage value input to the first input terminal exceeds the threshold value TH2, the comparator 21 outputs a high-level or low-level abnormality detection signal. The threshold value TH2 may be generated by resistance-dividing the output voltage Vs. In this case, in addition to a voltage value input to the first input terminal of the comparator 21, the threshold value TH2 also follows the fluctuation of the output voltage Vs, thereby obtaining an effect of canceling the fluctuation of the output voltage Vs. More specifically, since the output voltage Vs is resistance-divided and input to the operational amplifier 16, when the output voltage Vs fluctuates, the voltage value input to the first input terminal of the comparator 21 also fluctuates. When the threshold value TH2 is also generated by resistance-dividing the output voltage Vs, the threshold value TH2 similarly fluctuates when the output voltage Vs fluctuates. Therefore, a voltage value input to either the first input terminal or the second input terminal of the comparator 21 can also follow the fluctuation of the output voltage Vs.

An output terminal of the comparator 17 is connected to a first input terminal of the comparator 18. An output terminal of the comparator 21 is connected to a second input terminal of the comparator 18. An output terminal of the comparator 18 is connected to the protection circuit 30. When at least one of the abnormality detection signal and the high-temperature detection signal is received, the comparator 18 outputs a high-level or low-level protection start signal for operating the protection circuit 30. The comparator 18 may be implemented by, for example, an OR circuit. The comparator 18 may have a configuration in which the outputs of the comparator 17 and the comparator 21 are open drain outputs, and the outputs are connected by a wired OR.

The protection circuit 30 is a circuit for preventing or stopping power supply to the heater 40, and can adopt various configurations. For example, regardless of the control from the MCU 11, the protection circuit 30 includes a circuit for forcibly setting the switch SW2 or the switch SW1a to be an off state, a circuit for disconnecting the power supply from the battery 12 to the switch SW1a (for example, a circuit for stopping an output of a booster circuit when the booster circuit is provided between the switch SW1a and the battery 12), and the like.

When the MCU 11 shifts to an aerosol generation mode, which is an operation mode for generating an aerosol, by a user operation or the like, the MCU 11 performs control for supplying power from the battery 12 to the heater 40. The above-described control includes heating control which is control for supplying power to the heater 40 in order to heat the heater 40 (in other words, the base material portion 151), and measurement control which is control for supplying power to the heater 40 in order to measure a temperature of the heater 40 (in other words, the base material portion 151).

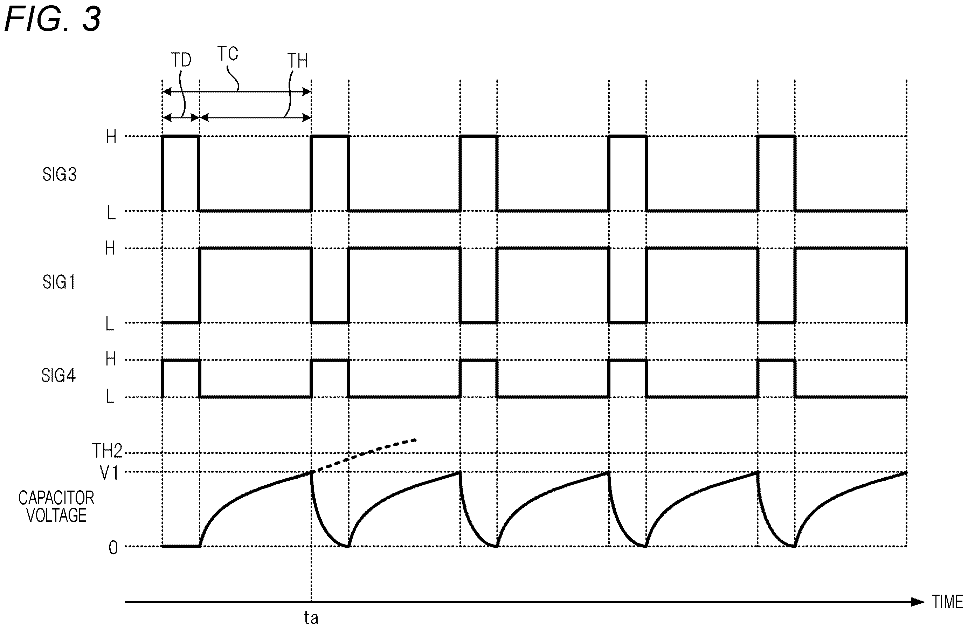

FIG. 3 is a timing chart illustrating an operation of the MCU 11 in the aerosol generation mode. FIG. 3 illustrates temporal changes in the control signal SIG3 of the switch SW3, the control signal SIG1 of the switch SW1, the control signal SIG4 of the switch SW4, and a voltage of the capacitor 23.

When the MCU 11 shifts to the aerosol generation mode, the MCU 11 repeatedly performs a set of the heating control and the measurement control at a predetermined control cycle TC in a state where the switch SW2 is controlled to be an on state. FIG. 3 illustrates a heating period TH in which the heating control is performed, a measurement period TD in which the measurement control is performed, and the control cycle TC of the MCU 11. The heating period TH and the measurement period TD each have a predetermined length, and in the example of FIG. 3, a start timing of the control cycle TC coincides with a start timing of the measurement period TD, an end timing of the measurement period TD coincides with a start timing of the heating period TH, and an end timing of the heating period TH coincides with an end timing of the control cycle TC.

In the heating control, the switch SW3 is set to be an off state and the switch SW1 is set to be an on state for a variable time in the heating period TH. The MCU 11 performs pulse width modulation (PWM) control for controlling a ratio (duty ratio) of the variable time to the length of the heating period TH. The DUTY ratio is varied, for example, between 0% to 100%. FIG. 3 illustrates an example in which the DUTY ratio is 100%.

By the heating control, power from the power supply 12 is supplied to the heater 40, and the heater 40 is heated. The power supplied to the heater 40 by the heating control is referred to as heating power, and the voltage applied to the heater 40 by the heating control is referred to as heating voltage. A timing at which the application of the heating voltage to the heater 40 ends in the heating period TH coincides with the end timing of the heating period TH. Therefore, the control cycle TC is a supply cycle of the heating power to the heater 40.

While the switch SW1 is in the on state in the heating period TH, the output voltage Vs is supplied to the RC series circuit including the resistance element 22 and the capacitor 23. As illustrated in FIG. 3, the MCU 11 controls the switch SW4 to be in an off state in the heating period TH. Therefore, in the heating period TH, the capacitor 23 is charged according to the output voltage Vs. It should be noted that an amount of charge to the capacitor 23 in one heating period TH increases as the DUTY ratio increases (as an application time of the heating voltage to the heater 40 increases).

In the measurement control, the operational amplifier 16 is operated in the measurement period TD, the switch SW1 is set to be an off state, the switch SW3 is set to be an on state, and the measurement power (output voltage Vs) lower than the heating power is supplied to the resistance element Rs and the heater 40. The voltage applied to the heater 40 by the measurement control is referred to as a measurement voltage. Since an electric resistance value of the resistance element Rs is sufficiently larger than an electric resistance value of the heater 40, the measurement voltage is sufficiently smaller than the heating voltage.

As illustrated in FIG. 3, in the measurement period TD, the MCU 11 also performs discharge control for setting the switch SW4 to be an on state. Since the discharge control is performed every time the control cycle TC starts, it can be said that the discharge control is performed at a timing based on the control cycle TC. Further, since the discharge control is performed every time the heating period TH ends, it can be said that the discharge control is performed at a timing synchronized with the end timing of the heating period TH. The synchronization of the two timings means that a difference between the two timings is equal to or less than a threshold value (ideally, 0), and includes a case where a slight difference such as a delay time of a circuit occurs between the two timings in addition to a case where the two timings coincide with each other.

By the measurement control, the measurement power from the LDO regulator 14 is supplied to a voltage dividing circuit including the resistance element Rs and the heater 40. The electric resistance value of the resistance element Rs is set to a value sufficiently larger than the electric resistance value of the heater 40. Accordingly, in a state where the measurement control is performed, a minute current can be supplied to the heater 40. In this state, the operational amplifier 16 outputs a voltage corresponding to the voltage applied to the heater 40. The output voltage of the operational amplifier 16 increases as the electric resistance value of the heater 40 increases. Here, it is assumed that the heater 40 has a positive-temperature-coefficient (PTC) characteristic. Therefore, as the temperature of the heater 40 (in other words, a temperature of the aerosol source) increases, the output voltage of the operational amplifier 16 increases. In this state, the MCU 11 acquires an output value of the ADC 50b and acquires the temperature of the heater 40 based on the output value. The MCU 11 adjusts the DUTY ratio described above based on the acquired temperature of the heater 40.

As illustrated in FIG. 3, in the measurement period TD, the switch SW4 is set to be an on state by the discharge control. Therefore, a voltage charged in the capacitor 23 in the heating period TH immediately before the measurement period TD is discharged by the discharge control performed in the measurement period TD. A time constant of the RC series circuit constituted by the resistance element 22 and the capacitor 23 is set to such a value that all of the maximum voltages (a voltage value which can be charged when the DUTY ratio is 100%, a voltage value V1 in FIG. 3) that can be charged in the capacitor 23 by one heating control can be discharged in the measurement period TD.

Therefore, after the voltage of the capacitor 23 rises from an initial value (for example, 0 V) by the heating control, the capacitor 23 is repeatedly discharged by the subsequent discharge control to return to an initial value. That is, as long as the MCU 11 appropriately performs the discharge control, the voltage of the capacitor 23 does not exceed the maximum voltage (voltage value V1).

The monitoring circuit 20 is provided to determine whether the voltage of the capacitor 23 is a value that cannot be reached when the MCU 11 operates normally, and to operate the protection circuit 30 when such a state is established.

Specifically, in the aerosol generation mode, the comparator 21 of the monitoring circuit 20 compares the voltage of the capacitor 23 with the threshold value TH2, and outputs an abnormality detection signal when the voltage of the capacitor 23 exceeds the threshold value TH2. The threshold value TH2 is set to a value larger than the maximum voltage (voltage value V1). The threshold value TH2 may be generated by resistance-dividing the output voltage Vs. In this case, in addition to a voltage value input to the first input terminal of the comparator 21, the threshold value TH2 also follows the fluctuation of the output voltage Vs, thereby obtaining an effect of canceling the fluctuation of the output voltage Vs. More specifically, since the output voltage Vs is resistance-divided and input to the operational amplifier 16, when the output voltage Vs fluctuates, the voltage value input to the first input terminal of the comparator 21 also fluctuates. When the threshold value TH2 is also generated by resistance-dividing the output voltage Vs, the threshold value TH2 similarly fluctuates when the output voltage Vs fluctuates. Therefore, a voltage value input to either the first input terminal or the second input terminal of the comparator 21 can also follow the fluctuation of the output voltage Vs.

For example, when the MCU 11 cannot perform the discharge control due to some factor, the voltage of the capacitor 23 is larger than the voltage value V1. In FIG. 3, for example, it is assumed that the discharge control to be performed in the measurement period TD started at a time ta is not performed. In this case, as indicated by a broken line in the drawing, in the measurement period TD and the heating period TH immediately after the time ta, the voltage of the capacitor 23 continues to rise and exceeds the voltage value V1 and the threshold value TH2. In this state, the abnormality detection signal is output from the comparator 21.

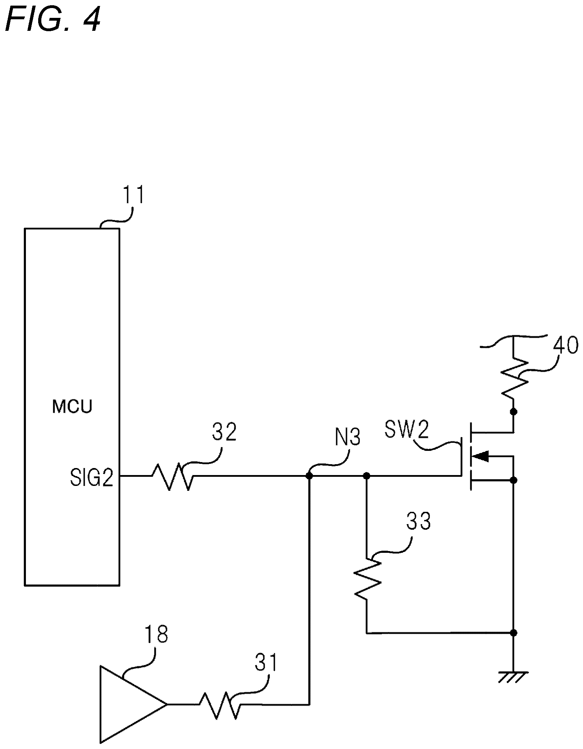

FIG. 4 is a diagram illustrating an example of the protection circuit 30. FIG. 4 illustrates a resistance element 32 connected to the MCU 11, an N-channel MOSFET as an example of the switch SW2, a resistance element 33 connected to a gate and a source of a N-channel MOSFET, and a resistance element 31 connected to the comparator 18.

One end of the resistance element 32 is connected to the MCU 11, and the other end of the resistance element 32 is connected to a gate of the N-channel MOSFET. A drain of the N-channel MOSFET is connected to the heater 40, and the source of the N-channel MOSFET is connected to a ground (main negative bus LD). The other end of the resistance element 31 is connected to a node N3 connecting the gate of the N-channel MOSFET and the resistance element 32. One end of the resistance element 31 is connected to the output terminal of the comparator 18. A node connecting the node N3 and the gate of the N-channel MOSFET is connected to a ground (main negative bus LD) via the resistance element 33. In the example of FIG. 4, the protection circuit 30 includes a portion extending from the comparator 18 to the node N3 and the resistance element 32.

The resistance element 32 is a resistor that limits a value of a current flowing from the MCU 11 to the comparator 18, and also serves as a gate resistance of the N-channel MOSFET. The resistance element 31 is a resistor that limits the value of a current flowing from the gate of the N-channel MOSFET to the comparator 18. The resistance element 33 is a resistor for fixing the gate potential of the N-channel MOSFET. In the example illustrated in FIG. 4, when the low-level protection start signal is output from the comparator 18, the gate potential of the N-channel MOSFET becomes the low level, and the switch SW2 is set to be an off state. Accordingly, the power supply to the heater 40 is disabled, and the heating of the heater 40 is stopped.

In the circuit illustrated in FIG. 4, a position of the resistance element 31 may be changed between the node N3 and a node connecting the resistance element 33 and the gate of the N-channel MOSFET. Further, the resistance element 32 and the resistance element 31 may be integrated into one resistance element, and the resistance element may be disposed at a position of the resistance element 31.

### (Heating Profile)

The MCU 11 controls the supply of the heating power to the heater 40 in accordance with a heating profile that defines the temperature transition of the heater 40 (susceptor inductively heated by a reactor equivalent to the heater 40 in the case of induction heating).

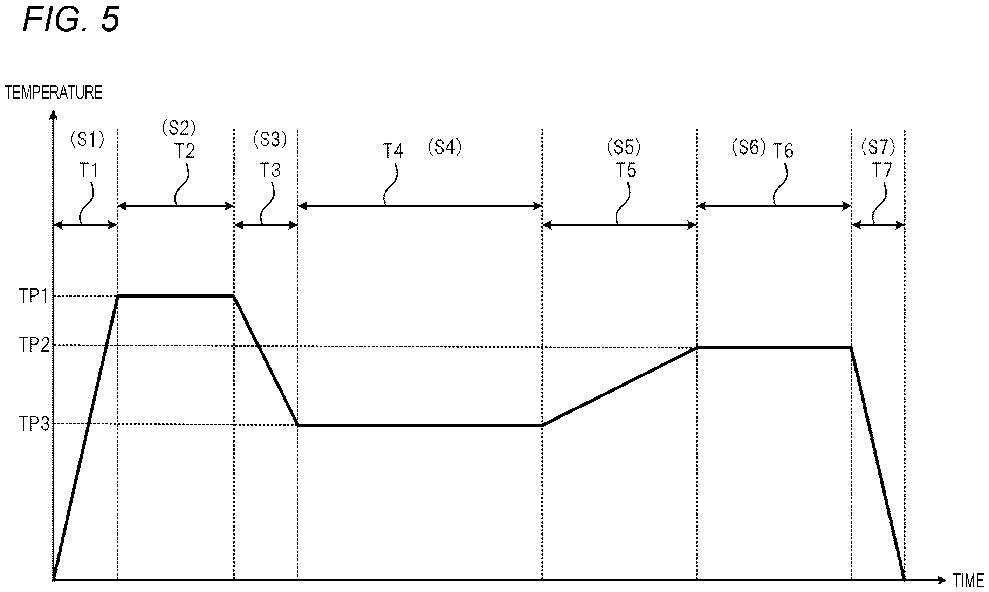

FIG. 5 is a diagram illustrating an example of the heating profile. A horizontal axis in the drawing indicates an elapsed time from the transition to the aerosol generation mode, and a vertical axis in the drawing indicates the temperature of the heater 40. The heating profile illustrated in FIG. 5 includes a temperature rising period T1 in which the temperature of the heater 40 is determined to be raised to a target temperature TP1, a temperature maintaining period T2 in which the temperature of the heater 40 is determined to be maintained at the target temperature TP1, a cooling period T3 in which the temperature of the heater 40 is determined to be lowered to a target temperature TP3, a temperature maintaining period T4 in which the temperature of the heater 40 is determined to be maintained at the target temperature TP3, a temperature rising period T5 in which the temperature of the heater 40 is determined to be raised to a target temperature TP2, a temperature maintaining period T6 in which the temperature of the heater 40 is determined to be maintained at the target temperature TP2, and a cooling period T7 in which the heating of the heater 40 is determined to be stopped.

The target temperature TP1 is higher than the target temperature TP2, and the target temperature TP2 is higher than the target temperature TP3. A gradient of the temperature transition of the heater 40 in the temperature rising period T1 is larger than a gradient of the temperature transition of the heater 40 in the temperature rising period T5, and is maximum among all the periods constituting the heating profile.

As described above, the heating profile includes a first period (temperature rising periods T1 and T5) in which the gradient of the temperature transition of the heater 40 is larger than a gradient threshold value (for example, 0), and a second period (temperature maintaining periods T2, T4, and T6) in which a gradient of the temperature transition of the heater 40 is equal to or smaller than the gradient threshold value.

When the MCU 11 shifts to the aerosol generation mode, the MCU 11 repeatedly performs a set of the measurement control, the heating control, and the discharge control such that the temperature of the heater 40 converges to the target temperature TP1 over the temperature rising period T1. Next, the MCU 11 repeatedly performs a set of the measurement control, the heating control, and the discharge control in the temperature maintaining period T2 such that the temperature of the heater 40 is maintained at the target temperature TP1. Next, the MCU 11 performs only the measurement control and the discharge control among the measurement control, the heating control, and the discharge control until the temperature of the heater 40 decreases to the target temperature TP3, and stops the heating control. When only the measurement control and the discharge control among the measurement control, the heating control, and the discharge control are performed, the MCU 11 does not prevent other controls other than the measurement control, the heating control, and the discharge control. Next, the MCU 11 repeatedly performs the set of the measurement control, the heating control, and the discharge control in the temperature maintaining period T4 such that the temperature of the heater 40 is maintained at the target temperature TP3. Next, the MCU 11 repeatedly performs the set of the measurement control, the heating control, and the discharge control such that the temperature of the heater 40 converges to the target temperature TP2 over the temperature rise period T5. Next, the MCU 11 repeatedly performs the set of the measurement control, the heating control, and the discharge control in the temperature maintaining period T6 such that the temperature of the heater 40 is maintained at the target temperature TP2. Finally, the MCU 11 ends the measurement control, the heating control, and the discharge control, and lowers the temperature of the heater 40. Hereinafter, periods in which control is performed according to different setting conditions of the temperature rising period T1, the temperature maintaining period T2, the temperature maintaining period T4, the temperature rising period T5, and the temperature maintaining period T6 are referred to as a period S 1, a period S2, a period S4, a period S5, and a period S6.

A period in which the user recommends the inhalation is from the start of the period S2 to the end of the period S7.

In the periods S 1 and S5, since the temperature of the heater 40 needs to be increased, the DUTY ratio tends to increase. In particular, in the period S 1, it is preferable to raise the temperature of the heater 40 in a short time as much as possible from the start of heating to a temperature suitable for starting the inhalation of the aerosol, and a temperature rising gradient is large, and thus the DUTY ratio tends to be particularly large. On the other hand, in the periods S2, S4, and S6, the temperature of the heater 40 may be maintained, and thus the DUTY ratio tends to be smaller than that in the periods S1 and S5.

In the cooling period T3, power supply to the heater 40 is stopped. Alternatively, only the measurement control and the discharge control may be performed in this period. Therefore, it should be noted that the voltage of the capacitor 23 has the initial value at a start time point of the period S4. When the power supply to the heater 40 is stopped, a temperature of the heater 40 may be measured by a thermistor (not illustrated) installed near the heater 40.

As described above, in the power supply unit including the electronic circuit 10, the voltage of the capacitor 23 charged by one supply of the heating power to the heater 40 is completely discharged by one discharge control by the MCU 11. Therefore, a state where the MCU 11 does not perform the discharge control (a state where an abnormality occurs in the MCU 11) can be determined by the magnitude of the voltage of the capacitor 23. Since the protection circuit 30 limits the supply of the heating power to the heater 40 when the voltage of the capacitor 23 is larger than the threshold value TH2, even when an abnormality occurs in the MCU 11, it is possible to appropriately limit the power supply to the heater 40 and improve the safety of the power supply unit.

Further, according to the power supply unit including the electronic circuit 10, when the heating control is performed, the operational amplifier 16 stops the output, and thus a high-temperature detection signal is not output from the comparator 17. Since a large heating power may be supplied to the heater 40 during the heating control, an output of the operational amplifier 16 tends to be large when the operational amplifier 16 operates. When the operational amplifier 16 operates during the heating control, a large output of the operational amplifier 16 may be input to the comparator 17, and the high-temperature detection signal may be output from the comparator 17. In the present embodiment, the operational amplifier 16 operates only in the period in which the measurement control is performed. Therefore, when the temperature of the heater 40 becomes excessively high, the comparator 17 can appropriately output the high-temperature detection signal. In this way, the protection circuit 30 can be appropriately operated to improve safety.

Hereinafter, a modification of the electronic circuit 10 will be described.

### (First Modification)

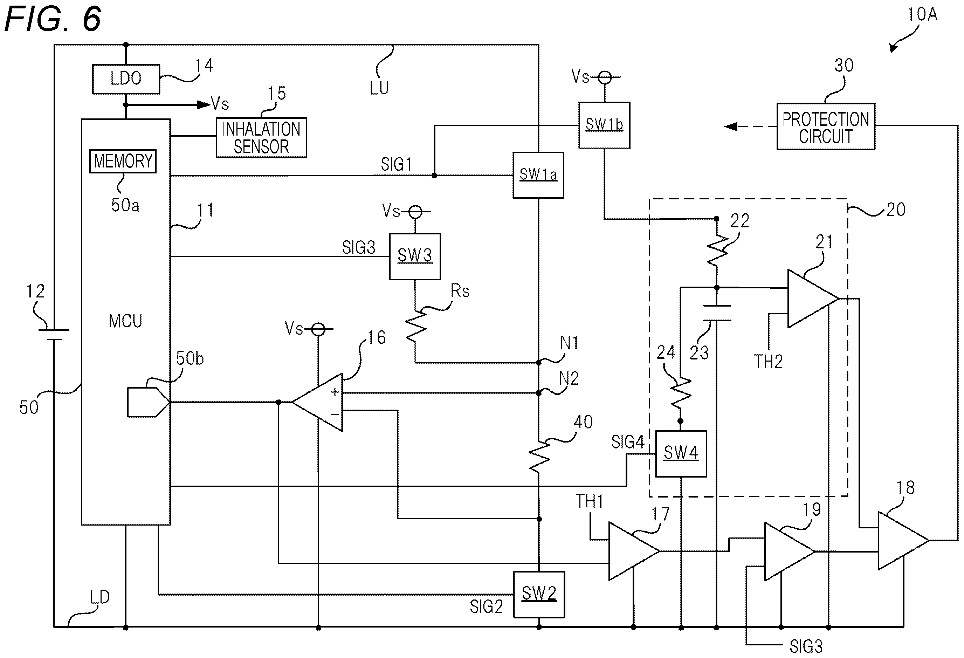

FIG. 6 is a diagram illustrating an electronic circuit 10A that is a modification of the electronic circuit 10 illustrated in FIG. 2. The electronic circuit 10A illustrated in FIG. 6 has the same configuration as that of the electronic circuit 10 except that a comparator 19 is added, and the operational amplifier 16 is changed to a circuit that constantly operates in the aerosol generation mode.

A first input terminal of the comparator 19 is connected to the output terminal of the comparator 17. A second input terminal of the comparator 19 is connected to the MCU 11. The control signal SIG3 is input from the MCU 11 to the second input terminal of the comparator 19. An output terminal of the comparator 19 is connected to the first input terminal of the comparator 18.

In the electronic circuit 10A, the operational amplifier 16 operates regardless of whether heating control or measurement control is performed. Therefore, even when the temperature of the heater 40 is not excessively high, a large voltage is output from the operational amplifier 16 during the heating control, and as a result of comparison between the voltage and the threshold value TH 1, a high-temperature detection signal can be output from the comparator 17. The comparator 19 is configured to output the high-temperature detection signal only when the high-temperature detection signal is received from the comparator 17 in a state where the high-level control signal SIG3 is received from the MCU 11 (that is, a state where only the measurement control of the heating control and the measurement control is performed). Therefore, when the temperature of the heater 40 becomes excessively high, the comparator 19 can appropriately output the high-temperature detection signal. In the first modification, since it is possible to constantly operate the operational amplifier 16, there is an advantage that the output of the operational amplifier 16 can be stabilized. Further, there is an advantage that a device having no control function according to the control signal can be used in the operational amplifier 16. A state where only the measurement control of the heating control and the measurement control is performed does not prevent the MCU 11 from performing control other than the heating control or the measurement control.

A signal that can determine which of the heating control and the measurement control is being performed may be input to the second input terminal of the comparator 19, and the control signal SIG1 may be input from the MCU 11. In this case, the comparator 19 may be configured to output the high-temperature detection signal only when the high-temperature detection signal is received from the comparator 17 in a state where the control signal SIG1 is at a low level (that is, a state where the heating voltage is not applied to the heater 40). Even with this configuration, when the temperature of the heater 40 becomes excessively high, the comparator 19 can appropriately output the high-temperature detection signal. For example, a current flowing between the switch SW1a and the node N1 may be detected, and when the current is detected, it may be determined that the heating control is performed, and a signal may be input to the second input terminal of the comparator 19. The comparator 19 may be implemented by an AND circuit.

### (Second Modification)

In the electronic circuit 10 or the electronic circuit 10A, a time constant of the RC series circuit including the resistance element 22 and the capacitor 23 may be set such that a voltage charged in the capacitor 23 by one heating control is not entirely discharged in the measurement period TD. In this case, a condition of the threshold value TH2 changes.

For example, since the DUTY ratio tends to be larger in the period S1 than in the other periods, a maximum number of times of continuous executions N (N is a natural number of 2 or more) of the heating control at the maximum DUTY ratio is set. The maximum number of times of continuous executions N is a numerical value in which it is determined that there is a design error when the heating control at the maximum DUTY ratio is continuously performed over this number of times.

The threshold value TH2 is set to a value that is reached by the application of the heating voltage to the heater 40 in the heating period TH (the DUTY ratio is the maximum) immediately after the set of the heating period TH (the DUTY ratio is the maximum) and the measurement period TD immediately after the heating period TH is repeated N times.

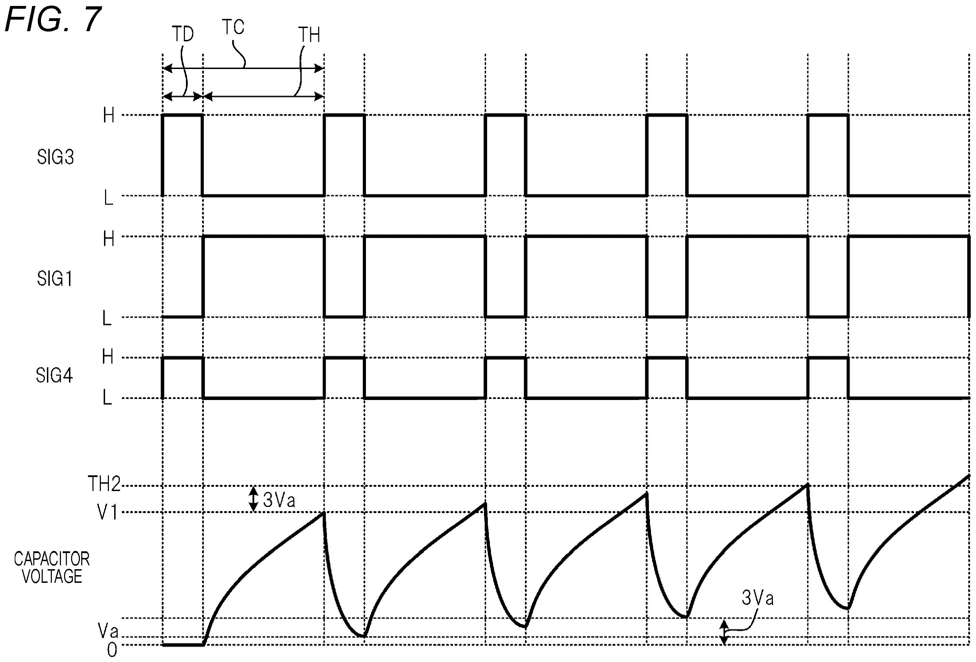

FIG. 7 is a timing chart illustrating an operation of the MCU 11 in the second modification. The timing chart illustrated in FIG. 7 is obtained when the control in the temperature rising period T1 is performed, and is different from the timing chart illustrated in FIG. 3 in that a voltage waveform of the capacitor 23 is changed.

In the example of FIG. 7, the maximum number of times of continuous executions N in the period S 1 is set to "4". In the example of FIG. 7, the voltage of the capacitor 23 that cannot be completely discharged in the measurement period TD is a voltage value Va. A value obtained by adding three times the voltage value Va to the voltage value V1 is set as the threshold value TH2. Thus, by setting the threshold value TH2, the voltage of the capacitor 23 exceeds the threshold value TH2 by performing the heating control five times from a state where the voltage of the capacitor 23 is at the initial value. In a state where the voltage of the capacitor 23 exceeds the threshold value TH2, the heating control is performed more than the maximum number of times of continuous executions N (= 4), and an abnormality may occur in the MCU 11. Therefore, overheating of the heater 40 can be prevented by operating the protection circuit 30.

In the period S 1, a DUTY ratio during the heating control may be smaller than a maximum DUTY ratio. Even when an abnormality occurs in the MCU 11 and the heating control is repeated at a DUTY ratio smaller than the maximum DUTY ratio, the voltage of the capacitor 23 exceeds the threshold value TH2 in some heating period TH. Therefore, the abnormality of the MCU 11 can be detected. For example, when the discharge control is not performed in a second measurement period TD in FIG. 7, the voltage of the capacitor 23 exceeds the threshold value TH2 in a second heating period TH. Therefore, even when an abnormality related to the discharge control occurs, the protection circuit 30 operates.

As described above, in the second modification, even when the discharge control by the MCU 11 is appropriately performed, the voltage of the capacitor 23 can be gradually increased by repeating the supply of the heating power to the heater 40 (that is, the heating control). When the heating control is not appropriately performed, the voltage of the capacitor 23 exceeds the threshold value TH2 and the protection circuit 30 operates. That is, although the MCU 11 performs the discharge control appropriately, when the heating control cannot be appropriately performed, it is possible to limit the power supply to the heater 40, prevent overheating of the heater 40 or the like, and improve safety.

According to the second modification, the presence or absence of an abnormality related to the heating control by the MCU 11 can be determined by the comparator 21, and the protection circuit 30 can be operated. The heating control is a more advanced control than the discharge control. In the second modification, the safety of the power supply unit can be further improved by detecting an abnormality in such an advanced control.

In the periods S2, S4, and S6, the DUTY ratios tend to be smaller than those in the other periods. Therefore, a rate of increase in the voltage of the capacitor 23 due to repetition of the heating control and the discharge control is lower than a rate of increase in the voltage of the capacitor 23 in the period S 1. That is, in the periods S2, S4, and S6, if a set of the heating period TH and the measurement period TD is not repeated sufficiently more times than the above-described N times, the voltage of the capacitor 23 does not exceed the threshold value TH2, and it is difficult to detect the abnormality of the MCU 11 early.

Therefore, in the periods S2, S4, and S6, the threshold value TH2 is preferably set to a value (= threshold value TH2a) smaller than that in the period S 1. The threshold value TH2a is set to, for example, a value that is reached by the application of the heating voltage to the heater 40 in the heating period TH (the DUTY ratio is half of the maximum) immediately after the set of the heating period TH (the DUTY ratio is half of the maximum) and the measurement period TD immediately after the heating period TH is repeated M times (M is a natural number of 2 or more). Thus, by setting the threshold value TH2a, even in the periods S2, S4, and S6, a state where the heating control is not appropriately performed can be detected early, and the protection circuit 30 can be operated.

For the same reason, in the period S5 in which the DUTY ratio tends to be larger than those in the periods S2, S4, and S6 and smaller than that in the period S 1, the threshold value TH2 is preferably set to a value (= threshold value TH2b) smaller than that in the period S1 and larger than those in the periods S2, S4, and S6.

Since the period S2 is a period in which the temperature of the heater 40 is maintained at a high temperature, the DUTY ratio tends to be larger than those in the periods S4 and S6. Here, in the period S2, the threshold value TH2 may be the same as a value set in the period S1, for example.

An inhalation operation by the user is performed after the period S2, and when the inhalation operation is performed, the temperature of the heater 40 temporarily decreases. Therefore, in order to return the temperature of the heater 40 to a target temperature, the MCU 11 performs control to temporarily increase the DUTY ratio. That is, an amount of increase in the voltage of the capacitor 23 may be temporarily increased by the inhalation operation. Therefore, in each period other than the period S1, when the inhalation operation is detected, the threshold value TH2 set in advance may be increased by a predetermined amount for a predetermined time. Accordingly, the determination of the abnormality of the MCU 11 can be performed with high accuracy.

There is an individual difference in the time constant of the RC series circuit of the monitoring circuit 20. Here, for example, the MCU 11 may control the switch SW1 and the switch SW4 to be on or off in the same manner as the actual heating control and the actual discharge control in a state where the switch SW2 is controlled to be in the off state, monitor the voltage of the capacitor 23, and determine how many seconds the voltage of the capacitor 23 reaches from the state of the initial value (0 V), and perform a calibration process of correcting the predetermined threshold value TH2, threshold value TH2a, and threshold value TH2b based on the determination result. In addition, for example, the MCU 11 may turn off the switch SW4 in the same manner as the actual discharge control in a state where the switch SW1 is controlled to be in the off state, monitor the voltage of the capacitor 23, determine how long and how many V the voltage of the capacitor 23 is discharged, and perform the calibration process of correcting the predetermined threshold value TH2, threshold value TH2a, and threshold value TH2b based on the determination result. For example, the MCU 11 may determine how long the voltage of the capacitor 23 is discharged to the initial value (0 V) and perform the calibration process based on the determination result. The MCU 11 may perform both calibration related to charging of the capacitor 23 and calibration related to discharging of the capacitor 23. Accordingly, the determination of the abnormality of the MCU 11 can be performed with high accuracy by absorbing the individual difference. The calibration process may be performed at a timing such as at the time of manufacturing the power supply unit, at the time of starting, or at the time of transition to the aerosol generation mode.

A threshold value in the calibration process may be changed using an IC incorporated in the power supply unit, a DA converter, an external DA converter, a direct digital synthesizer, or the like included in the MCU 11. Alternatively, a plurality of voltage dividing circuits having different electric resistance values may be provided, any one of the voltage dividing circuits may be selected, and an output of the selected voltage dividing circuit may be used as a threshold value.

### (Third Modification)

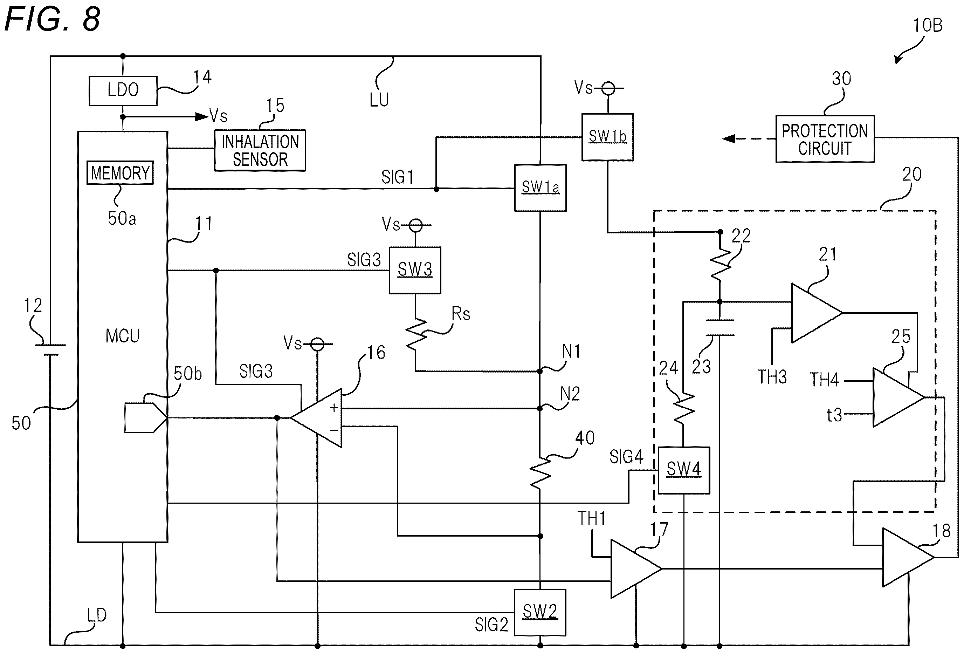

FIG. 8 is a diagram illustrating an electronic circuit 10B that is a modification of the electronic circuit 10 illustrated in FIG. 3. The electronic circuit 10B illustrated in FIG. 8 has the same configuration as the electronic circuit 10 except that a comparator 25 is added to the monitoring circuit 20 and the threshold value TH2 input to the comparator 21 is changed to a threshold value TH3.

The threshold value TH3 is a value of a voltage at which the voltage of the capacitor 23 reaches after a predetermined time has elapsed from the state of the initial value (a state at the start of the period S1 and a state at the start of the period S4) when the heater 40 is heated in accordance with the heating profile illustrated in FIG. 5. The threshold value TH3 is, for example, an average value of a plurality of measured values.

For example, when the MCU 11 operates normally, the voltage of the capacitor 23 reaches the threshold value TH3 when an elapsed time from the start of the control in the temperature rising period T 1 reaches the time t1. Similarly, when the MCU 11 operates normally, the voltage of the capacitor 23 reaches the threshold value TH3 when an elapsed time from the start of the control in the temperature maintaining period T4 reaches the time t2. The time t1 and the time t2 are values obtained by actual measurement, and the time t1 is shorter than the time t2.

Thus, when the times t1 and t2 are determined, an abnormality occurs in the MCU 11, and if a state where the DUTY ratio is unintentionally large continues in the period S1 and the period S2, the voltage of the capacitor 23 is the threshold value TH3 at a timing at which an elapsed time from the start of the period S1 is the time t1. In addition, when an abnormality occurs in the MCU 11 and a state where the DUTY ratio is unintentionally small continues in the period S1 and the period S2, the voltage of the capacitor 23 is the threshold value TH3 at a timing further after a timing at which the elapsed time from the start of the period S 1 reaches the time t1.

That is, in the periods S1 and S2, when a difference between the time t1 and an elapsed time from a time point when the voltage of the capacitor 23 reaches the initial value (0 V) at a time point when the voltage of the capacitor 23 reaches the threshold value TH3 is large, the MCU 11 does not normally control the DUTY ratio. Similarly, after the period S4, when a difference between the time t2 and an elapsed time from a time point (a start time point of the period S4) when the voltage of the capacitor 23 reaches the initial value (0 V) at a time point when the voltage of the capacitor 23 reaches the threshold value TH3 is large, the MCU 11 does not normally control the DUTY ratio.

To one of the two input terminals of the comparator 25 of the monitoring circuit 20, the time t1 is input as a threshold value TH4 in the period S1 and the period S2, and the time t2 is input as the threshold value TH4 in each period after the period S4. The other of the two input terminals of the comparator 25 is connected to the MCU 11. Information on an elapsed time t3 from the start of the period S1 or the period S4 is input from the MCU 11 to the other input terminal. The comparator 25 has an enable terminal connected to the output terminal of the comparator 21. An output terminal of the comparator 25 is connected to the second input terminal of the comparator 18.

In the monitoring circuit 20 of the electronic circuit 10B, when an output of the comparator 21 becomes a high level (in other words, the voltage of the capacitor 23 reaches the threshold value TH3), the comparator 25 becomes an enable state, and an elapsed time t3 is compared with the threshold value TH4 (time t1 or time t2). As a result of the comparison, when a difference between the elapsed time t3 and the threshold value TH4 is equal to or larger than a difference threshold value (that is, when there is an abnormality in the heating control of the MCU 11), a high-level signal is output from the comparator 25, and when the difference is less than the difference threshold value, a low-level signal is output from the comparator 25. When the voltage input to one of the two input terminals becomes a high level, the comparator 18 outputs a protection start signal for operating the protection circuit 30.

As described above, in the electronic circuit 10B, it is possible to determine the presence or absence of an abnormality related to the heating control of the MCU 11 based on the comparison between the threshold value TH4 and the elapsed time t3 until the voltage of the capacitor 23 reaches the threshold value TH3 from the state of the initial value (0 V), and to improve the safety of the power supply unit. A configuration of the monitoring circuit 20 of the electronic circuit 10B is also applicable to the electronic circuit 10A.

In the above description, in a period in which the control in accordance with the heating profile is performed, a timing at which the voltage of the capacitor 23 is the initial value is a start time point of each of the period S1 and the period S4.

However, for example, a period for performing only the discharge control and the measurement control without performing the heating control may be provided at a start time point of each of the periods S2, S5, and S6, and the voltage of the capacitor 23 may be returned to the initial value. In this case, the threshold value TH4 set in the period S1 and the period S5 is preferably smaller than the threshold value TH4 set in the periods S2, S4, and S6.

More preferably, the threshold value TH4 in the period S1 is minimized, the threshold value TH4 in the period S5 is larger than the threshold value TH4 in the period S1, and the threshold value TH4 in the periods S2, S4, and S6 is larger than the threshold value TH4 in the period S5. Thus, by setting the threshold value TH4 suitable for the content of the heating control, it is possible to determine the presence or absence of an abnormality of the MCU 11 with higher accuracy.

When the user performs the inhalation operation, the threshold value TH4 may be decreased by a predetermined amount from a preset value. Accordingly, it is possible to determine the presence or absence of an abnormality of the MCU 11 with higher accuracy.

The threshold value TH4 is preferably adjusted by the same calibration process as described in the electronic circuits 10 and 10A.

In the electronic circuit 10 and the electronic circuit 10B, the monitoring circuit 20 and the comparator 18 may be omitted, and an output of the comparator 17 may be directly connected to the protection circuit 30. Even with this configuration, when the temperature of the heater 40 is high, the protection circuit 30 can be appropriately operated according to the high-temperature detection signal to improve safety. In the electronic circuit 10 and the electronic circuit 10B, the comparator 17 and the comparator 18 may be omitted, and an output of the monitoring circuit 20 may be directly connected to the protection circuit 30. Even with this configuration, when an abnormality occurs in the MCU 11, the protection circuit 30 can be appropriately operated according to the abnormality detection signal to improve safety.

In the electronic circuit 10A, the monitoring circuit 20 and the comparator 18 may be omitted, and an output of the comparator 19 may be directly connected to the protection circuit 30. Even with this configuration, when the temperature of the heater 40 is high, the protection circuit 30 can be appropriately operated according to the high-temperature detection signal to improve safety. In the electronic circuit 10A, the comparator 17, the comparator 18, and the comparator 19 may be omitted, and the output of the monitoring circuit 20 may be directly connected to the protection circuit 30. Even with this configuration, when an abnormality occurs in the MCU 11, the protection circuit 30 can be appropriately operated according to the abnormality detection signal to improve safety.

In the electronic circuit 10, the electronic circuit 10A, and the electronic circuit 10B, the switch SW1b may be omitted, a booster circuit may be provided between the main positive bus LU and the switch SW1a, and one end of the resistance element 22 may be connected to the node N1.

In a case where the power supply unit 110 has a configuration in which a first container and a second container are detachable from each other and a heating portion that heats the second container is provided, it is possible to prevent overheating of the second container and improve safety by replacing the heater 40 in each of the electronic circuit 10, the electronic circuit 10A, and the electronic circuit 10B with the heating portion.

In the present specification, at least the following matters are described. In parentheses, corresponding constituent components and the like in the above-mentioned embodiment are indicated, but the present invention is not limited thereto.
(1) A power supply unit (power supply unit 110) for an aerosol generating device, the power supply unit including:
   a power supply (battery 12);
   a processor (MCU 11) configured to perform control to supply heating power from the power supply to a heating element (heater 40 (reactor and susceptor in the case of induction heating)) for heating an aerosol source and/or a flavor source;
   a protection circuit (protection circuit 30) configured to limit supply of the heating power to the heating element; and
   a monitoring circuit (monitoring circuit 20) including a charge circuit (resistance element 22 and capacitor 23) that is capable of storing power (output voltage Vs) from the power supply when the heating power is supplied from the power supply to the heating element, the monitoring circuit being configured to output a signal (abnormality detection signal) for operating the protection circuit based on a voltage of the charge circuit, in which
   the processor is configured to perform discharge control to discharge the voltage of the charge circuit at a timing (start timing of a measurement period TD) based on a supply cycle (control cycle TC) of the heating power to the heating element.

According to (1), for example, the voltage of the charge circuit charged by one supply of the heating power to the heating element is completely discharged by one discharge control by the processor, so that a state where the processor does not discharge the charge circuit (a state where an abnormality occurs in the processor) can be determined by a magnitude of the voltage of the charge circuit. For example, when the voltage of the charge circuit is larger than a threshold value, the monitoring circuit outputs a signal for operating the protection circuit, so that even when an abnormality occurs in the processor, the power supply to the heating element can be appropriately limited, and the safety of the aerosol generating device can be improved.

According to (1), for example, the voltage of the charge circuit charged by one supply of the heating power to the heating element is not completely discharged by one discharge control by the processor, so that a state where the processor does not appropriately supply the heating power to the heating element (a state where an abnormality occurs in the processor) can be determined by the magnitude of the voltage of the charge circuit. For example, when the voltage of the charge circuit is larger than a threshold value, the monitoring circuit outputs a signal for operating the protection circuit, so that when the processor does not appropriately supply the heating power to the heating element, the power supply to the heating element can be appropriately limited, and the safety of the aerosol generating device can be improved.

According to (1), for example, when the voltage of the charge circuit charged by one supply of the heating power to the heating element is not completely discharged by one discharge control by the processor and the processor appropriately supplies the heating power to the heating element, the elapsed time until the voltage of the charge circuit reaches the threshold value is within a predetermined range, so that the state where the processor does not appropriately supply the heating power to the heating element can be determined based on the elapsed time until the voltage of the charge circuit reaches the threshold value. For example, when the elapsed time is out of the predetermined range, the monitoring circuit outputs a signal for operating the protection circuit, so that when the processor does not appropriately supply the heating power to the heating element, the power supply to the heating element can be appropriately limited, and the safety of the aerosol generating device can be improved.

(2) The power supply unit for an aerosol generating device according to (1), in which
the timing is synchronized with an end timing of control for supplying the heating power to the heating element.

According to (2), since the charge circuit is discharged every time the heating power is supplied, for example, compared to a configuration in which the charge circuit is discharged once when the heating power is supplied twice, the capacity of the charge circuit can be reduced, and a manufacturing cost can be reduced and a size can be reduced.

(3) The power supply unit for an aerosol generating device according to (1) or (2), in which
the monitoring circuit outputs a signal for operating the protection circuit based on a comparison result between the voltage of the charge circuit and a first threshold value (threshold value TH2).

According to (3), since the supply of the heating power to the heating element can be limited only by comparing the voltage and the threshold value, the control can be simplified.

(4) The power supply unit for an aerosol generating device according to (3), in which
the voltage of the charge circuit charged by one supply of the heating power to the heating element is entirely dischargeable by the discharge control, and
the first threshold value is larger than a maximum voltage (voltage value V1) of the charge circuit charged by one supply of the heating power to the heating element.

According to (4), when the charge circuit is not discharged due to an abnormality of the processor, the voltage of the charge circuit exceeds the first threshold value. Therefore, the occurrence of the abnormality related to the discharge control of the processor can be detected, and the supply of the heating power to the heating element can be limited.

(5) The power supply unit for an aerosol generating device according to (3), in which
the voltage of the charge circuit charged by one supply of the heating power to the heating element is larger than the voltage of the charge circuit discharged by the discharge control.

According to (5), by repeating the supply of the heating power to the heating element and the discharge control, the voltage of the charge circuit can be increased. When the supply of the heating power is appropriately performed, by setting the first threshold value such that the voltage of the charge circuit does not exceed the first threshold value, it is possible to determine whether the supply of the heating power is appropriately performed based on a magnitude relation between the first threshold value and the voltage of the charge circuit.

(6) The power supply unit for an aerosol generating device according to (5), in which
the first threshold value is a value that is reached by charging the charge circuit in a period in which the heating power is supplied to the heating element after charge and discharge of the charge circuit are repeated a plurality of times.

According to (6), when more than necessary charge and discharge are repeated, the voltage of the charge circuit exceeds the first threshold value. Therefore, it is possible to detect a state where a large amount of the heating power is unintentionally supplied to the heating element.

(7) The power supply unit for an aerosol generating device according to (5) or (6), in which
the processor is configured to perform supply control of the heating power to the heating element in accordance with a heating profile that defines temperature transition of the heating element, and
the first threshold value is variably controlled based on the heating profile in a period in which the supply control is performed in accordance with the heating profile.

According to (7), since the appropriate first threshold value is set in accordance with the heating profile, the protection circuit can be appropriately operated.

(8) The power supply unit for an aerosol generating device according to (7), in which
the heating profile includes a first period (temperature rising periods T1 and T5) in which a gradient of the temperature transition is larger than a gradient threshold value and a second period (temperature maintaining periods T2, T4, and T6) in which the gradient of the temperature transition is equal to or smaller than the gradient threshold value, and
the first threshold value is set to different values in the first period and the second period.

According to (8), since the appropriate first threshold value is set in accordance with the heating profile, the protection circuit can be appropriately operated.

(9) The power supply unit for an aerosol generating device according to (8), in which
the first threshold value set in the first period is larger than the first threshold value set in the second period.

According to (9), in the first period, since a larger amount of heating power is supplied to the heating element than in the second period, the voltage of the charge circuit also tends to increase. Therefore, the protection circuit can be appropriately operated by increasing the first threshold value in the first period.

(10) The power supply unit for an aerosol generating device according to (7), in which
the heating profile includes a first period (temperature rising period T1) in which a gradient of the temperature transition is maximum, and
the first threshold value set in the first period is set to be maximum in a period in which the supply control is performed in accordance with the heating profile.

According to (10), in the first period, since a large amount of heating power is supplied to the heating element, the voltage of the charge circuit also tends to increase. Therefore, in this period, the protection circuit can be appropriately operated by increasing the first threshold value.

(11) The power supply unit for an aerosol generating device according to any one of (5) to (10), further including
an inhalation sensor (inhalation sensor 15) configured to detect an inhalation operation by a user, in which
the first threshold value is temporarily increased when the inhalation operation is detected.

According to (11), when a large amount of heating power is temporarily supplied to the heating element by the inhalation operation, the protection circuit can be appropriately operated by increasing the first threshold value.

(12) The power supply unit for an aerosol generating device according to any one of (3) to (11), in which
the processor is configured to
supply power from the power supply to the charge circuit, acquire the voltage of the charge circuit charged by the power, and adjust the first threshold value based on the voltage, or
acquire the voltage of the charge circuit by performing control to discharge the voltage of the charge circuit, and adjust the first threshold value based on the voltage.

According to (12), since the first threshold value can be adjusted according to an individual difference of the charge circuit, the protection circuit can be appropriately operated regardless of the individual difference.

(13) The power supply unit for an aerosol generating device according to (1) or (2), in which
the monitoring circuit is configured to output a signal for operating the protection circuit based on a first time period (elapsed time t3) until the voltage of the charge circuit reaches a second threshold value (threshold value TH3) from an initial value (0 V).

According to (13), when the supply of the heating power is appropriately performed, by setting a time threshold value such that the first time period does not greatly deviate from the time threshold value, it is possible to determine whether the supply of the heating power is appropriately performed based on a relation between the time threshold value and the first time period and appropriately operate the protection circuit.

(14) The power supply unit for an aerosol generating device according to (13), in which
the monitoring circuit is configured to operate the protection circuit when a difference between the first time period and the time threshold value (threshold value TH4) is equal to or larger than a difference threshold value.

According to (14), the protection circuit can be appropriately operated.

(15) The power supply unit for an aerosol generating device according to (14), in which
the processor is configured to perform supply control of the heating power to the heating element in accordance with a heating profile that defines temperature transition of the heating element, and
the time threshold value is variably controlled based on the heating profile in a period in which the supply control is performed in accordance with the heating profile.

According to (15), since the appropriate time threshold value is set in accordance with the heating profile, the protection circuit can be appropriately operated.

(16) The power supply unit for an aerosol generating device according to (15), in which
the heating profile includes a first period (temperature rising periods T1 and T5) in which a gradient of the temperature transition is larger than a gradient threshold value and a second period (temperature maintaining periods T2, T4, and T6) in which the gradient of the temperature transition is equal to or smaller than the gradient threshold value, and
the time threshold value is set to different values in the first period and the second period.

According to (16), since the appropriate time threshold value is set in accordance with the heating profile, the protection circuit can be appropriately operated.

(17) The power supply unit for an aerosol generating device according to (16), in which
the time threshold value set in the first period is smaller than the time threshold value set in the second period.

According to (17), in the first period, since a larger amount of heating power is supplied to the heating element than in the second period, a time until the voltage of the charge circuit reaches the second threshold value is shortened. Therefore, the protection circuit can be appropriately operated by shortening the time threshold value in the first period.

(18) The power supply unit for an aerosol generating device according to (15), in which
the heating profile includes a first period (temperature rising period T1) in which a gradient of the temperature transition is maximum, and
the time threshold value set in the first period is set to be minimum in a period in which the supply control is performed in accordance with the heating profile.

According to (18), in the first period, since a larger amount of heating power is supplied to the heating element, a time until the voltage of the charge circuit reaches the second threshold value is shortened. Therefore, the protection circuit can be appropriately operated by shortening the time threshold value in this period.

(19) The power supply unit for an aerosol generating device according to any one of (14) to (18), further including
an inhalation sensor (inhalation sensor 15) configured to detect an inhalation operation by a user, in which
the time threshold value is temporarily reduced when the inhalation operation is detected.

According to (19), when a large amount of heating power is temporarily supplied to the heating element by the inhalation operation, the protection circuit can be appropriately operated by reducing the time threshold value.

(20) The power supply unit for an aerosol generating device according to any one of (14) to (19), in which
the processor is configured to
supply power from the power supply to the charge circuit, acquire the voltage of the charge circuit charged by the power, and adjust the time threshold value based on the voltage, or
acquire the voltage of the charge circuit by performing control to discharge the voltage of the charge circuit, and adjust the time threshold value based on the voltage.

According to (20), since the time threshold value can be adjusted according to an individual difference of the charge circuit, the protection circuit can be appropriately operated regardless of the individual difference.

(21) A control method for a power supply unit for an aerosol generating device, the power supply unit including: a processor (MCU 11) configured to perform control to supply heating power from a power supply (battery 12) to a heating element (heater 40 (reactor and susceptor in the case of induction heating)) for heating an aerosol source and/or a flavor source; a protection circuit (protection circuit 30) configured to limit supply of the power to the heating element; and a charge circuit (resistance element 22 and capacitor 23) capable of storing the power, the control method including:
performing discharge control to discharge the voltage of the charge circuit (resistance element 22 and capacitor 23) at a timing (start timing of a measurement period TD) based on a supply cycle (control cycle TC) of the heating power to the heating element; and
operating the protection circuit based on the voltage of the charge circuit.

### REFERENCE SIGNS LIST

12: battery (power supply)
20: monitoring circuit
30: protection circuit
110: power supply unit
11: MCU (processor)
TC control cycle (supply cycle)

## Claims

1. A power supply unit for an aerosol generating device, the power supply unit comprising:
a power supply;
a processor configured to perform control to supply heating power from the power supply to a heating element for heating an aerosol source and/or a flavor source;
a protection circuit configured to limit supply of the heating power to the heating element; and
a monitoring circuit including a charge circuit that is capable of storing power from the power supply when the heating power is supplied from the power supply to the heating element, the monitoring circuit being configured to output a signal for operating the protection circuit based on a voltage of the charge circuit, wherein
the processor is configured to perform discharge control to discharge the voltage of the charge circuit at a timing based on a supply cycle of the heating power to the heating element.

2. The power supply unit for an aerosol generating device according to claim 1, wherein
the timing is synchronized with an end timing of control for supplying the heating power to the heating element.

3. The power supply unit for an aerosol generating device according to claim 1 or 2, wherein
the monitoring circuit outputs a signal for operating the protection circuit based on a comparison result between the voltage of the charge circuit and a first threshold value.

4. The power supply unit for an aerosol generating device according to claim 3, wherein
the voltage of the charge circuit charged by one supply of the heating power to the heating element is entirely dischargeable by the discharge control, and
the first threshold value is larger than a maximum voltage of the charge circuit charged by one supply of the heating power to the heating element.

5. The power supply unit for an aerosol generating device according to claim 3, wherein
the voltage of the charge circuit charged by one supply of the heating power to the heating element is larger than the voltage of the charge circuit discharged by the discharge control.

6. The power supply unit for an aerosol generating device according to claim 5, wherein
the first threshold value is a value that is reached by charging the charge circuit in a period in which the heating power is supplied to the heating element after charge and discharge of the charge circuit are repeated a plurality of times.

7. The power supply unit for an aerosol generating device according to claim 5 or 6, wherein
the processor is configured to perform supply control of the heating power to the heating element in accordance with a heating profile that defines temperature transition of the heating element, and
the first threshold value is variably controlled based on the heating profile in a period in which the supply control is performed in accordance with the heating profile.

8. The power supply unit for an aerosol generating device according to claim 7, wherein
the heating profile includes a first period in which a gradient of the temperature transition is larger than a gradient threshold value and a second period in which the gradient of the temperature transition is equal to or smaller than the gradient threshold value, and
the first threshold value is set to different values in the first period and the second period.

9. The power supply unit for an aerosol generating device according to claim 8, wherein
the first threshold value set in the first period is larger than the first threshold value set in the second period.

10. The power supply unit for an aerosol generating device according to claim 7, wherein
the heating profile includes a first period in which a gradient of the temperature transition is maximum, and
the first threshold value set in the first period is set to be maximum in a period in which the supply control is performed in accordance with the heating profile.

11. The power supply unit for an aerosol generating device according to any one of claims 3 to 10, wherein
the processor is configured to
supply power from the power supply to the charge circuit, acquire the voltage of the charge circuit charged by the power, and adjust the first threshold value based on the voltage, or
acquire the voltage of the charge circuit by performing control to discharge the voltage of the charge circuit, and adjust the first threshold value based on the voltage.

12. The power supply unit for an aerosol generating device according to claim 1 or 2, wherein
the monitoring circuit is configured to output a signal for operating the protection circuit based on a first time period until the voltage of the charge circuit reaches a second threshold value from an initial value.

13. The power supply unit for an aerosol generating device according to claim 12, wherein
the monitoring circuit is configured to output a signal for operating the protection circuit when a difference between the first time period and a time threshold value is equal to or larger than a difference threshold value.

14. The power supply unit for an aerosol generating device according to claim 13, wherein
the processor is configured to perform supply control of the heating power to the heating element in accordance with a heating profile that defines temperature transition of the heating element, and
the time threshold value is variably controlled based on the heating profile in a period in which the supply control is performed in accordance with the heating profile.

15. A control method for a power supply unit for an aerosol generating device, the power supply unit including: a processor configured to perform control to supply heating power from a power supply to a heating element for heating an aerosol source and/or a flavor source; a protection circuit configured to limit supply to the heating element; and a charge circuit capable of storing the power, the control method comprising:
performing discharge control to discharge a voltage of the charge circuit at a timing based on a supply cycle of the power to the heating element; and
operating the protection circuit based on the voltage of the charge circuit.
